# EUROPEAN PATENT APPLICATION

(11) **EP 4 799 990 A1**
(43) Date of publication of application: **02.09.2026**
(21) Application number: 26161437.4
(22) Date of filing: 27.02.2026
(51) Int. Cl.: C04B 26/26, C04B 111/00, C08L 95/00

(54) **PAVING COMPOSITIONS INCORPORATING RECLAIMED ASPHALT**

(30) Priority: 28.02.2025 US 202563764621 P
(71) Applicant: Kraton Polymers Nederland B.V., 1322 CE Almere (NL)
(72) Inventor: POROT, Laurent Olivier, 1031 HL Amsterdam (NL); DAMEN, Jacobus Wilhelmus Maria, 1031 HL Amsterdam (NL)
(74) Representative: Henkel & Partner mbB

(57) **Abstract**

An asphalt paving composition is disclosed containing: 3 to 8 wt.% of a polymer modified bitumen (PmB), 30 to 70 wt.% of a reclaimed asphalt (RA), 27 to 70 wt.% of virgin aggregates, and up to 25 wt.% of optional components. The PmB comprises a virgin bitumen, a styrenic block copolymer (SBC), and optionally at least one additive. The SBC is composed of a block A of vinyl aromatic units, and a block B composed of conjugated diene units. The SBC has a vinyl content of ≤ 15 mol%, and a molecular weight (Mₚ) of < 150 kg/mol. The RA includes an aged binder and aggregates. The asphalt paving composition incorporates a high level of RA content and still maintains desired viscosity, elasticity, and overall performance.

## Description

### TECHNICAL FIELD

The present disclosure relates to asphalt paving compositions containing reclaimed asphalt in asphalt surface materials.

### BACKGROUND

The use of polymer-modified bitumen, such as bitumen containing styrene-butadiene-styrene (SBS) polymer, is known to enhance pavement performance by improving resistance to permanent deformation, cracking resistance, and aging. However, there is a growing emphasis on sustainability, particularly increased use of reclaimed asphalt (RA) in asphalt paving compositions while maintaining long-term pavement durability.

RA is obtained from milled or processed asphalt pavement, containing aged bitumen and aggregates. Its use reduces material costs and promotes sustainability by minimizing the consumption of non-renewable resources, either aggregates or petroleum-based binder. However, aged bitumen becomes harder and more brittle due to oxidation, leading to increased pavement cracking and reduced strain tolerance. To address these challenges, softer virgin bitumen is added to balance the stiffness of the aged bituminous binder. However, excessive use of reclaimed materials can still result in premature pavement failure. Therefore, an effective solution is needed to enable a high content of RA, (e.g., aged binder), while ensuring desired properties and durability. Recycling and reusing reclaimed asphalt granulates in base layer materials is already a common practice using standard bitumen or softer bitumen or asphalt recycling additives. However, there are still limitations for recycling RA granulates into surface layer due to the higher demanding performances of those materials.

There is still a need for improved polymer-modified bitumen for use in asphalt paving compositions with high RA content to achieve optimal overall performance in surface layer application.

### SUMMARY

In one aspect, the disclosure relates to a paving composition comprises, consists essentially of, or consists of: (a) 3 to 8 wt.% of a polymer modified bitumen (PmB); (b) 30 to 70 wt.% of a reclaimed asphalt (RA); (c) 27 to 70 wt.% of virgin aggregates; and (d) up to 25 wt.% of optional components, based on total weight of the paving composition. The PmB comprises: 92 to 95 wt.% of a virgin bitumen, 5 to 8 wt.% of a styrenic block copolymer (SBC); and up to 3 wt.% of at least one additive. The SBC is composed of at least one block A formed from a polymerized vinyl aromatic monomer, and at least one block B formed from a polymerized conjugated diene monomer. The SBC has a vinyl content of 2 - 15 mol%, and a molecular weight (Mₚ) of 80 - 150 kg/mol. The asphalt paving composition exhibits a relative rut depth of less than 5% after 10,000 wheel load cycles measured at 60°C according to EN 12697-22.

In an aspect, the PmB has a viscosity of 0.5 to 5 Pa.s, measured at 120 to 180°C, according to EN13302.

In an aspect, the PmB further comprises aged binder at a weight ratio of virgin binder to aged binder of 3:7 to 7:3. The PmB exhibits an elastic recovery at 25°C of > 60%, or > 70%, as measured according to EN 13398 in a non-aged state or after short-term aging by Rolling Thin Film Oven Test (RTFOT) in accordance with EN 12607-1.

In an aspect, the polymer modified bitumen has a cross-over temperature for tan δ = 1 of 10 to 35°C; and a complex shear modulus |*G**| of 2000 to 50000, or 3000-15000, or 4000-10000 kPa kPa, both measured according to EN14770.

### DESCRIPTION OF THE DRAWINGS

FIG .1 illustrates the Dynamic Shear Rheometer shear modulus vs temperature of various embodiments of PmB compositions.

### DESCRIPTION

The following terms will be used throughout the specification.

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"Consisting of" refers to a composition that includes only the specifically listed components and excludes other components that materially affect the technical solution or distinctive function of the invention. However, the presence of other components in small amounts that do not materially affect the technical effect of the invention is not excluded, such as trace-level stabilizers, process residues, or solvents used during preparation.

"At least one of A, B, and C" means one or more members selected from the group consisting of A, B, and C. Thus, it includes A only, B only, C only, A and B, A and C, B and C, and A, B, and C.

A list of embodiments recited as "A, B, or C" is interpreted to include A only, B only, C only, or any combination of two or more of A, B, and C, unless the context clearly indicates otherwise.

"Any of A, B, or C" means one member selected from A, B, and C.

If used, "any of A, B, and C" means one or more members selected from A, B, and C, and is intended to have the same scope as "at least one of A, B, and C.".

"Vinyl aromatic unit content" or VAC of a block copolymer refers to the weight percentage of polymerized vinyl aromatic monomers, e.g., styrene, para-methylstyrene, etc., in the block copolymer. VAC is calculated by dividing the total molecular weight of all vinyl aromatic units by the total molecular weight of the block copolymer. It can be determined by using proton nuclear magnetic resonance spectroscopy (¹H NMR) and/or ¹³C NMR. VAC is sometimes used interchangeably with PSC (polystyrene content).

"Vinyl content" refers to the content (mol%) of a conjugated diene monomer that is polymerized via 1,2-addition in the case of butadiene, or via 3,4-addition in the case of isoprene, resulting in a monosubstituted olefin, or vinyl group, adjacent to the polymer backbone. Vinyl content can be measured by nuclear magnetic resonance spectrometry (NMR).

"Unit" refers to the structural building block derived from one monomer following its polymerization, representing a repeating entity that forms part of the polymer or copolymer chain. Unlike a "monomer," which is the individual molecule before polymerization, a "unit" is the transformed version of the monomer after undergoing the polymerization process. A polymerized unit can be further transformed into a hydrogenated unit or a functionalized unit.

"Molecular weight" or M_{W} refers to the styrene equivalent molecular weight in kg/mol of a polymer block or a block copolymer. M_{W} can be measured with gel permeation chromatography (GPC) using polystyrene calibration standards, such as is done according to ASTM D5296-19. The GPC detector can be an ultraviolet or refractive index detector or a combination thereof. The chromatograph is calibrated using commercially available polystyrene molecular weight standards. M_{W} of polymers measured using GPC so calibrated are styrene equivalent molecular weights or apparent molecular weights. M_{W} expressed herein is measured at the peak of the GPC trace-and commonly referred to as styrene equivalent "peak molecular weight," designated as Mₚ.

"Coupling efficiency" or CE refers to the weight % of coupled polymer molecules relative to the total weight of both coupled and uncoupled polymer molecules. CE is expressed as a percentage (%) and can be used to estimate the content of diblock structures or, more generally, the proportion of "uncoupled arms" in the block copolymer. For example, a CE of 80% indicates that the block polymer contains 20 wt.% diblock (uncoupled) species and 80 wt.% triblock and multi-arm species.

"Asphalt" refers to binder plus aggregates. In the present disclosure, the term "asphalt" refers to the composite material comprising a bituminous binder and aggregates, which is generally used for paving applications. This type of asphalt is also known as "asphalt concrete" or "asphalt mix."

"Reclaimed asphalt" or RA refers to reprocessed or recycled asphalt material obtained from old or damaged asphalt paving materials that has been milled, removed, or excavated or coming from plant production waste. RA consists of a binder and aggregates that can be reused in new asphalt mixtures. The term RA can be used interchangeably for reclaimed asphalt coming from pavement or reclaimed asphalt from plant waste.

"Bitumen" refers to a black, sticky mixture of viscous organic liquids or semi-solids derived from crude oil, composed primarily of condensed aromatic hydrocarbons. Alternatively, bitumen can be described as a mixture of maltenes and asphaltenes. It can exist as crude bitumen or as refined bitumen, obtained as the bottom residue from the vacuum distillation of crude oil, thermal cracking, or hydrocracking.

"Virgin bitumen" refers to new, unmodified bitumen that has not been previously used or reclaimed from old asphalt pavement. It is produced directly from crude oil refining and has not undergone aging, oxidation, or mixing with recycled asphalt materials or modified.

"Polymer-modified bitumen" or PmB refers to bitumen that has been modified with polymers to enhance its performance characteristics, such as durability, elasticity, and resistance to deformation.

"Virgin asphalt" refers to a combination of virgin aggregate with virgin bitumen or virgin bituminous binder, and not previously used for paving.

"Binder" refers to the organic material that holds the aggregate particles together, providing cohesion and structural integrity to the pavement. It is typically a combination of bitumen and optionally modified with polymers, elastomers, or additives to enhance their performance properties.

"Aged binder" refers to binder has undergone oxidative and/or thermal aging, resulting in increased stiffness and viscosity relative to its original state. In the context of reclaimed asphalt (RA), aged binder refers to binder present in or recoverable from RA, typically existing as a coating on aggregate particles and not isolated prior to mixing.

"Non-aged binder" refers to binder that has not been subjected to laboratory aging procedures such as RTFOT or PAV and that has not undergone field aging within reclaimed asphalt. Non-aged binder corresponds to the binder in its original, as-produced state.

Unless otherwise expressly specified, any reference to properties of the polymer-modified bitumen (PmB) refers to the PmB in a non-aged state. Properties relating to Multiple Stress Creep Recovery (MSCR) are measured after short-term aging by Rolling Thin Film Oven Test (RTFOT) in accordance with EN 12607-1, unless otherwise indicated. Properties relating to low-temperature creep stiffness (S = 300 MPa) or m-value determined by Bending Beam Rheometer (BBR) are measured after short-term aging by RTFOT followed by long-term aging by Pressure Aging Vessel (PAV) in accordance with EN 14769, unless otherwise indicated.

"Virgin binder" refers to new, unmodified or modified binder, that has not been previously used or recovered from recycled materials.

"Aggregates" refers to mineral granular materials such as sand, gravel, crushed stone, slag, or recycled materials that are used as a primary component in asphalt mixtures. Any conventional type of aggregate suitable for use in asphalt can be used. Examples of suitable aggregates include granite, limestone, gravel, and mixtures thereof. Aggregates can be coarse aggregates, fine aggregates, filler aggregates, and the like.

"Air void content" refers to the volume of air voids within an asphalt paving composition (e.g., asphalt mixture), expressed as a percentage of the total volume of the mix. It represents the interconnected air spaces that exist between the aggregate particles and the asphalt binder after compaction. The void content can be measured according to EN12697-8.

The disclosure relates to an asphalt paving composition containing a polymer-modified bitumen (PmB), a reclaimed asphalt (RA), virgin aggregates, and optional components. The PmB includes a virgin bitumen and a styrenic block copolymer (SBC). The asphalt paving composition effectively incorporates a high RA content of 30 to 70 wt.%, while maintaining desired viscosity, elasticity, and overall performance.

(Polymer Modified Bitumen (PmB)): The PmB comprises: 92 to 95 wt.% of a virgin bitumen, 5 to 8 wt.% of a SBC, and optional additives.

The PmB can further include other polymers in addition to the SBC. Examples include other SBCs, ethylene/propylene/diene rubber (EPDM), ethylene-vinyl-acetate polymer, polybutadiene, polyisoprene, natural rubber, crumb rubber, polyethylene, oxidized polyethylene, polypropylene, ethylene propylene co-polymer, polyolefin elastomers, maleic anhydride-grafted polymers, vinyl silane functionalized polymers, acrylic polymers, polyvinyl chloride, polymethyl methacrylate, ethylene-glycidyl-acrylate polymer, epoxy resins, etc.

In embodiments, the asphalt paving composition contains PmB in amounts of 3 - 8, or 4 - 8, or 4 - 7, or 3 - 7, or 3 - 6, or 4 - 7, or 4 - 6, or > 3, or < 8 wt.%, based on total weight of the paving composition.

(Virgin Bitumen): The virgin bitumen is any naturally occurring bitumen or derived from petroleum sources. Suitable bitumen includes mixtures of one or more of these bitumen with extenders (fluxes) such as petroleum extracts, e.g., aromatic extracts, distillates, or residues, with oils, bio-based extenders, etc.

In embodiments, the virgin bitumen has a penetration value at 25°C in the range of 35/50 to 250/330, or 50/70 to 250/330, or 70/100 to 160/220, or 70/100 to 250/330, or 100/150 to 250/330 (0.1 mm). The penetration value of bitumen refers to the consistency of bitumen at intermediate temperature by determining the depth in tenths of a millimeter that a standard needle vertically penetrates the bitumen specimen under specified conditions of loading, time, and temperature. Needle penetration can be measured according to EN 1426.

In embodiments, the virgin bitumen is a performance grade (PG) bitumen. Examples include PG 52-34, PG 64-22, PG 58-22, PG 70-22, PG 64-28, etc. In the Superpave^{™} PG classification system, the first number refers to the seven-day maximum pavement design temperature and the second number refers to the minimum pavement design temperature (in °C).

In embodiments, the virgin bitumen is added in amounts of 92 - 95, or > 92, or < 95 wt.%, based on total weight of the PmB.

(Styrenic Block Copolymer (SBC)): The SBC is an unhydrogenated block copolymer and is a linear or branched (multi-armed) block copolymer, comprising at least one block A derived from a vinyl aromatic monomer and at least one block B derived from a conjugated diene monomer. The SBC can be any diblock, triblock, tetrablock, pentablock, and mixtures thereof.

In embodiments, the SBC has a general structure selected from: A-B, (A-B)ₙX, A-B-A, (A-B-A)ₙX, A-B-A-B, A-B-A-B-A, and mixtures thereof; where n is an integer from 2 to 30, or 2 to 15, or 2 to 10, or 2 to 4, and X is a residue of a coupling agent.

In embodiments, the block B contains vinyl aromatic units, similar to the block A, in amounts of up to 30, or 2 - 25, or 5 - 20 wt.%, based on total weight of the block B.

In embodiments, the coupling agent includes bi- or polyfunctional compounds, for example divinylbenzene, halides of aliphatic or araliphatic hydrocarbons, such as 1,2-dibromoethane, bis(chloromethyl)benzene, silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane, methyltriethoxysilane, tetramethoxysilane, dimethyladipate, gamma-glycidoxypropyltrimethoxy silane, and mixtures thereof.

In embodiments, the vinyl aromatic monomer is selected from the group consisting of styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, 1,1-diphenylethylene, dimethyl styrene, halogenated styrene, methoxy styrene, acetoxy styrene, vinyl toluene, isomers of vinyl toluene, vinyl xylene, 4-vinylbiphenyl, vinyl naphthalene, vinyl anthracene, and mixtures thereof. In embodiments, the vinyl aromatic monomer is styrene.

In embodiments, the conjugated diene monomer is selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, the SBC is prepared by anionic polymerization at a temperature ranging from -50 to 300°C, or 0 to 100°C, using techniques known in the art. Other methods, such as cationic polymerization, can also be employed. The anionic polymerization initiator is generally an organometallic compound, such as an organolithium compound, e.g., ethyl-, propyl-, isopropyl-, n-butyl-, sec-butyl-, tert-butyl-, phenyl-, hexylbiphenyl-, hexamethylenedi-, butadieneyl-, isopreneyl-, 1,1-diphenylhexyllithium, or polystyryllithium. The amount of initiator needed is calculated based on the molecular weight to be achieved, e.g., 0.002 to 5 wt.%, based on amount of monomers to be polymerized. Suitable solvents include aliphatic, cycloaliphatic, or aromatic hydrocarbons having from 4 to 12 carbon atoms, such as pentane, hexane, heptane, cyclopentane, cyclohexane, methylcyclohexane, decalin, isooctane, benzene, alkylbenzenes, such as toluene, xylene, or ethylbenzene, or suitable mixtures thereof. Polymer chain termination can be achieved by quenching with a proton donor or a compound having a leaving group that can be displaced by the carbanionic polymer chain.

In embodiments, the SBC has a coupling efficiency (CE) of > 65%, or > 70%, or 60 - 98%, or 65 - 95%, or 70 - 95 wt.%, or 75 - 95%.

In embodiments, the SBC comprises a mixture of at least two block copolymers selected from the group consisting of diblock and species with more than 2 blocks (e.g., triblock, tetrablock, pentablock, etc.). In embodiments, the diblock constitutes from 5 - 35, or 10 - 35, or 10 - 30, or 15 - 30, or 5 - 25, or > 5, or < 40, or < 30 wt.%; and the species with more than 2 blocks constitute from 65 - 95, or 65 - 90, or 70 - 90, or 70 - 85, or 75 - 95, or > 60, or < 95 wt.%, based on total weight of the SBC.

In embodiments, the SBC has a vinyl content of > 2, or ≤ 15, or 3 - 15, or 3 - 12, or 8 - 12 mol%, based on total mol of the polymerized conjugated diene monomers in the block B.

In embodiments, the SBC has a VAC of at least 25, or > 27, or < 50, or 25 - 50, or 25 - 45, or 25 - 40, or 26 - 35 wt.%, based on total weight of the SBC.

In embodiments, each block A has a Mₚ of > 3, or < 13, or 3 - 13, or 5 - 13, or 5 - 12, or 6 - 13, or 7 - 13 kg/mol.

In embodiments, the SBC has a Mₚ of > 80, or < 150, or < 140, or 80 - 150, or 90 - 140, or 100 - 135 kg/mol.

In embodiments, the SBC has a melt flow rate (MFR) of > 2, or < 15, or 2 - 15, or 5 - 12, or 8 - 15, or 5 - 15 g/10 min, measured at 200°C with 5 kg load, according to ASTM D1238.

In embodiments, the SBC has a general structure selected from any of (A-B)ₙX and A-B-A.

In embodiments, the SBC consists essentially of triblock copolymers. In other embodiments, the SBC is a mixture of triblock and diblock copolymers in a weight ratio of triblock to diblock of 3:2 to 10:1, or 4:1 to 7:3, or 3:2 to 1:1.

In embodiments, the SBC is a mixture of two different SBCs varying in triblock contents or melt flow rates. The mixture can have two SBCs in a weight ratio of 1:5 to 5:1, or 1:3 to 3:1, or 1:1.

In embodiments, the SBC is functionalized by introducing a functional group selected from the group consisting of hydroxyl, amino, carboxyl, acid anhydride, epoxy, isocyanate, silanol, silane, aldehyde, ketone, thiols, halides, vinyl, aziridine, ether, and the like.

In embodiments, the SBC is used in amounts of 5 - 8, or > 5, or < 8 wt.%, based on total weight of the PmB.

(Optional Additives): The PmB further comprises at least one additive selected from the group consisting of stabilizers, warm-mix additives, cross-linking agents, fillers, UV stabilizers, plasticizers, processing aids, rheology modifiers, adhesion promoters, anti-stripping agents, antioxidants, and mixtures thereof.

Examples of cross-linking agents include elemental sulfur, hydrocarbyl polysulphides, dithiocarbamates, organic peroxides, polyphosphoric acid, metal oxides, silanes, and the like.

Additive if used, is in amounts of up to 3 wt.%, or < 2 wt.%, or < 1 wt.%, or < 0.5 wt.%, or 0.05 -3, 0.05 - 2, 0.05 - 1, 0.05 - 0.5 wt.%, based on total weight of the PmB.

(Preparation of PmB): The PmB can be prepared by dissolving the SBC in the virgin bitumen at a temperature sufficient to achieve dissolution (e.g., > 150°C, or > 160°C, or up to 180°C, or 140 - 200°C, or 160 - 180°C) for 0.5 to 24 hours, or 0.5 to 15 hours, or 0.5 to 10 hours, or 0.5 to 6 hours, forming a homogenous blend. Optional additives can be added to the blend. "Homogeneous blend" refers to a mixture in which SBC is uniformly dispersed within the bitumen component.

(Reclaimed Asphalt (RA)): RA is obtained from milled, removed, or excavated asphalt pavement, or from asphalt plant production waste. RA comprises aged binder and aggregates. These materials (aged binder, aggregates, etc.) are generated when asphalt pavements are removed for reconstruction, resurfacing, rehabilitation, or to obtain access to buried utilities.

The amount of RA incorporated into the asphalt paving composition depends on factors such as the age of the RA, climatic exposure conditions, and the condition of the aged binder. RA is typically crushed, sieved and characterized prior to use, for example according to EN13108-08.

In embodiments, RA is present in an amount of > 30, or > 40, or < 70, or 30 - 70, or 30 - 65, or 30 - 60, or 35 - 65, or 35 - 60, or 40 - 70 wt.%, or 40 - 60, based on total weight of the asphalt paving composition.

(Aged Binder): Aged binder is present in or recoverable from RA. Typically, the aged binder exists as a coating on aggregate particles within the RA and is not isolated prior to mixing. The aged binder can be recovered for analysis by conventional solvent extraction techniques, such as extraction using dichloromethane. The content of aged binder in RA can be determined by solvent extraction and subsequent quantification of the recovered binder. In embodiments, the aged binder content in the RA ranges from 1 - 10, or 2.5 - 8.5, or 4 - 6.5 wt.%, based on total weight of the RA.

Aged binder can contain a suitable amount of a polymer in amounts of up to 7 wt.%, or 0 - 7, or 0.5 - 5, or > 0.5, or < 7 wt.%, based on total weight of the aged binder.

In embodiments, the aged binder has a penetration value at 25°C of < 40, or < 25, or < 20, or < 15, or > 1 (0.1 mm).

(Virgin Aggregates): Aggregates used in asphalt paving compositions serve as the primary structural component, providing strength, durability, and resistance to deformation. Aggregates are typically derived from natural sources such as crushed stone, gravel, sand, etc.

Aggregates are classified based on size, shape, specific gravity, and mineral composition, which influence the mechanical performance and long-term stability of the paving composition.

In embodiments, coarse aggregates typically range from 4 mm to 40 mm in size, contribute to load-bearing capacity and resistance to rutting, while fine aggregates, generally < 4 mm, contribute to workability and compactability of the asphalt mixture.

In embodiments, the asphalt paving composition comprises virgin aggregates in amounts of 27 - 70, or 35 - 65, or > 30, or < 70 wt.%, based on total weight of the asphalt paving composition.

(Optional Components): In embodiments, the asphalt paving composition further comprises other components selected from the group consisting of asphalt recycling agent (also known as rejuvenator), polymers (other than SBC), anti-stripping agents, fibers, crumb rubber, anti-rutting additives, friction modifiers, viscosity modifiers, plasticizers, rheology modifiers, bitumen extender, air-entraining agents, set retarders, accelerators, pozzolanic additives, shrinkage-reducing agents, corrosion inhibitors, pigments, defoaming or foaming agents, softening agent, and mixtures thereof.

In embodiments, optional components are present in amounts of up to 25 wt.%, or 0 - 25, or 0.5 - 15, or 1 - 10, or 0.5 - 5 wt.%, based on total weight of the asphalt paving composition.

(Preparation of Asphalt Paving Compositions): The asphalt paving composition can be prepared by combining components (e.g., PmB, RA, virgin aggregates, and optional components, etc.) in one or more mixing vessels under conditions suitable for producing a homogeneous asphalt mixture. The components can be introduced simultaneously or sequentially.

In embodiments, the asphalt paving composition is prepared by mixing virgin aggregates with RA at an elevated temperature (e.g., 120 to 190°C), followed by addition of the PmB and optional components.

In embodiments, the asphalt paving composition is compactable at a temperature of 120°C without the addition of a warm mix asphalt (WMA) chemical additive.

In embodiments, the asphalt paving composition is a stone mastic asphalt composition according to EN13108-05.

(Properties of PmB): The PmB exhibits improved elastic properties, processability, and storage stability. The properties described below include those of PmB made from virgin bitumen (with and without aging), as well as those of a blend of PmB and aged binder.

In embodiments, the PmB, prior to aging, has a softening point of 60 - 75°C, or 62 - 73°C, or 65 - 71°C, measured according to EN 1427.

In embodiments, the ratio of the viscosity of the PmB measured at 120°C to the viscosity measured at 150°C is ≤ 5, or 0-5, or 1-5, or 2-5, or 3-5, as determined according to EN 13302.

In embodiments, the PmB has a viscosity of < 5, or < 4, or > 0.5, or > 0.2, or 0.2 - 5, or 0.5 - 5, or 1 - 4.5 Pa.s, measured at 120°C to 180°C, according to EN13302. In embodiments, the viscosity of the PmB at a mixing temperature of 120°C to 180°C is selected to approximate the viscosity of the aged binder present in the reclaimed asphalt (RA).

In embodiments, the viscosity of the PmB at a mixing temperature in the range of 135-165°C matches or approximates the viscosity of the aged binder at the same temperature. In certain embodiments, the viscosity of the PmB in the range of 135-165°C differs from the viscosity of the aged binder at the same temperature by < 60%, or < 50%, or < 40%, or < 30%, or < 25%, or < 10%, or < 5%, relative to the viscosity of the aged binder, as measured according to EN 13702-1.

In embodiments, the viscosity ratio of PmB to aged binder at 150°C is from 0.50 to 1.5, or 0.50 to 1.25, or 0.50 to 1.0, or 0.5 to 2.5, or 0.6 to 2.0, or 0.75 to 1.75. In embodiments, the viscosity ratio of PmB to aged binder at 135°C is from 0.75 to 1.50, or 0.8 to 1.3, or 0.9 to 1.2.

Without wishing to be bound by theory, when the viscosities of the PmB and the aged binder are within a comparable range at mixing temperature, the aged binder is mobilized and incorporated into a continuous binder phase during asphalt production. In contrast, when the viscosity of the PmB is substantially lower than that of the aged binder, the virgin binder can preferentially coat aggregate particles, resulting in incomplete blending and reduced contribution of the aged binder to pavement performance.

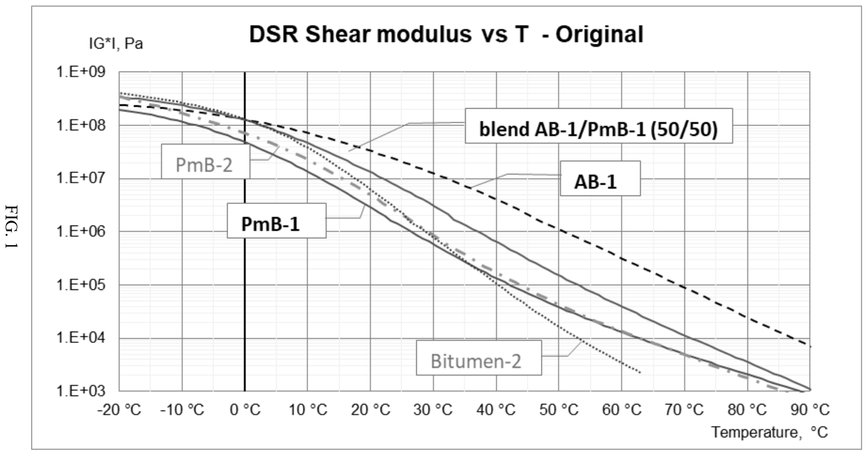

In embodiments as illustrated in Figure 1, the PmB, prior to aging, has a cross-over temperature range for tan δ = 1 of 0 - 30°C, or 10 to 35°C or 10 to 30°C, or 12 - 28°C, or 14 - 26°C, or 14 - 30°C, or 10 - 26°C, 0 - 20°C, measured according to EN14770. In embodiments, the PmB, prior to aging, has a complex shear modulus |*G**| of 2000 - 50000, 3000 - 15000, or 4000-10000, or 5000 - 50000, or 5300 - 40000, or 5500 - 35000, or 5800 - 30000, or 6000 - 25000, or 6000 - 25000 kPa in the temperature ranging from 10 to 35°C 10 to 30°C, measured according to EN14770.

In embodiments, the PmB, prior to aging, has a temperature "T |*G**| = 5 MPa" of 10 - 35°C, or 12 - 32°C, or 15 - 30°C, or 10 - 20°C, measured according to EN14770. The expression "T |*G**| = 5 MPa" refers to the temperature at which the complex shear modulus (|G*|) equals 5 MPa. In embodiments, the PmB has a phase angle (δ) at complex shear modulus |G*| = 5 MPa of 30 - 65°, or 35 - 55°, or 40 - 50°, or 30 - 50°, or 40 - 65°. Both measurements are obtained according to EN14770.

In embodiments, the PmB, prior to aging, has a "T|*G**| = 15 kPa" of 45 - 80°C, or 50 - 75°C, or 55 - 70°C, or 45 - 70°C, or 55 - 80°C, or > 60°C, or < 80°C where T|*G**|= 15 kPa refers to the temperature at which the PmB has a complex shear modulus of 15 kPa . In embodiments, the PmB has a phase angle (δ) at complex shear modulus |G*| of 15 kPa of 30 - 65°, or 35 - 55°, or 40 - 50°, or 30 - 50°, or 40 - 65°. Both measurements are obtained according to EN14770.

In embodiments, the PmB, after aging, has a percent recovery of up to 100%, or > 50%, or > 55%, or > 60%, or < 95%, measured at a stress level of 3.2 kPa at 60°C by Multiple Creep Stress Recovery Test (MSCRT) test, according to EN16659.

In embodiments, the PmB, after aging, has a non-recoverable creep compliance (Jnr) of < 1, or < 0.5, or < 0.1, or > 0.001 kPa⁻¹, measured at a stress level of 3.2 kPa at 60°C by MSCRT test, according to EN16659.

In embodiments, the PmB, after aging, has a percent recovery of > 30%, or > 33%, or < 70%, measured at a stress level of 3.2 kPa at 70°C by MSCRT test, according to EN16659.

In embodiments, the PmB, after aging, has a non-recoverable creep compliance (Jnr) of < 1, or < 0.8, or < 0.6, or > 0.001 kPa⁻¹, measured at a stress level of 3.2 kPa at 70°C by MSCRT test, according to EN16659.

In embodiments, the PmB has an elastic recovery of up to 100%, or >95%, or > 90%, or > 80%, or > 70%, or < 98%, measured at 25°C according to EN13398. The elastic recovery can be measured in a non-aged state or after short-term aging by Rolling Thin Film Oven Test (RTFOT) in accordance with EN 12607-1.

In embodiments, the PmB, after aging, has a temperature at creep stiffness, S=300 MPa, of < -30°C, or < -25°C, or < -20°C, or < -15°C, or < 0°C, measured by Bending Beam Rheometer (BBR) according to EN14771.

In embodiments, the PmB, after aging, has a temperature at m-value, m-Value=0.300, of < -30°C, or < -25°C, or < -20°C, or < -15°C, or < 0°C, measured BBR according to EN14771.

In embodiments, the polymer modified bitumen further comprises aged binder in addition to virgin binder, wherein the weight ratio of virgin binder to aged binder ranges from 3:7 to 7:3. In such embodiments, the polymer modified bitumen exhibits an elastic recovery at 25°C of greater than 60%, or greater than 70%, as measured according to EN 13398. The elastic recovery can be measured in a non-aged state or after short-term aging by Rolling Thin Film Oven Test (RTFOT) in accordance with EN 12607-1.

(Properties of Asphalt Paving Composition): The asphalt paving composition containing PmB efficiently accommodates RA at a high level while maintaining desired viscosity and elasticity. The asphalt paving composition shows excellent rutting resistance, fatigue and crack resistance, improved adhesion properties against raveling, and long service life.

In embodiments, the asphalt paving composition has an air void content of < 7%, or < 6%, or > 1%, or 1 - 7%, or 1 - 6%, or 2 - 7%, measured according to EN12697-8.

In embodiments, the asphalt paving composition exhibits a void content of < 10, or > 3, or 3 - 10, or 4 - 9, or 5 - 8, or 3 - 8, or 5 - 10%, after 100 gyrations at a compaction temperature of 150°C, measured according to EN 12697-31.

In embodiments, the asphalt paving composition exhibits a void content of < 10, or > 3, or 3 - 10, or 4 - 9, or 5 - 8, or 3 - 8, or 5 - 10%, after 100 gyrations at a compaction temperature of 120°C, measured according to EN 12697-31.

In embodiments, the asphalt paving composition exhibits a void content of 4 - 7%, or 4 - 6%, or 4.5 - 6%, or 4.5 - 5.5%, after 200 gyrations at a compaction temperature of 150°C, measured according to EN 12697-31.

In embodiments, the asphalt paving composition requires > 90, or > 100, or > 110, or < 250, or 90 - 250, or 100 - 250, or 110 - 250 gyrations, to reach a void content of 7% at a compaction temperature of 150°C, measured according to EN 12697-31.

In embodiments, the asphalt paving composition has an indirect tensile strength (ITS) of > 1900, or < 3000, or 1900 - 3000, or 1950 - 2800, or 1900 - 2400 kPa, measured according to EN 12697-23.

In embodiments, the asphalt paving composition has an indirect tensile strength ratio (ITSR) of > 80%, or > 90%, or 100%, measured according to EN 12697-12. ITSR is a measure of the water sensitivity of the asphalt paving composition, indicating how much the tensile strength of the composition decreases due to moisture exposure.

In embodiments, the asphalt paving composition exhibits a relative rut depth, expressed as a percentage of specimen thickness, of < 5%, or < 4% or 0 - 5%, or 1 - 5%, or 0 - 4%, or 1 - 4%, after 10,000 wheel load cycles measured at 60°C by a wheel tracking test (WTT) using a small size device according to EN 12697-22.

In embodiments, the asphalt paving composition requires < 25000, or < 24000, or < 23000, or < 22500, or > 15000, or 15000 - 25000, or 15000 - 24000, or 15000 - 23000, or 15000 - 22500 wheel load cycles, to reach a relative rut depth of 5%, measured at 60°C by a wheel tracking test according to EN 12697-22.

(Applications): The asphalt paving composition containing reclaimed asphalt (RA) can be used for roadway surfaces, parking lots, driveways, airport runways, taxiways, aprons, and the like. The composition can be used for any purpose for which an asphalt paving composition containing a virgin binder would conventionally be used. For example, the composition can be used for shoulder widening, pothole patching, as a base material and as a surface material. Surface layers include the top layer of a pavement structure and, in certain embodiments, the binder layer beneath the top layer. Such layers are typically designed to be durable, resistant to water penetration, resistant to traffic-induced deformation, resistant to low-temperature cracking, and to provide adequate skid resistance.

In embodiments, the asphalt paving composition accommodates the RA in subsequent recycling cycles, including a second or third recycling cycle.

(Analytical): In embodiments, the components of the asphalt paving composition are characterized after placement and compaction by recovery of the binder from a pavement sample. A pavement core can be obtained from an installed asphalt layer using conventional coring techniques. The binder can be separated from the aggregate fraction by solvent extraction in accordance with EN 12697-1 or equivalent standard methods. Suitable solvents include dichloromethane, toluene, trichloroethylene, or mixtures thereof. The extracted binder solution is then subjected to solvent removal and binder recovery, for example by rotary evaporation or similar procedures in accordance with EN 12697-3, to obtain a recovered binder suitable for subsequent analytical testing.

The recovered binder can be analyzed to determine rheological, compositional, and structural characteristics. Dynamic shear rheometer (DSR) measurements is performed according to EN 14770 to determine complex shear modulus (|G*|), phase angle (δ), cross-over temperature for tan δ = 1, temperature at |G*| = 5 MPa, temperature at |G*| = 15 kPa, and related rheological parameters. Multiple Stress Creep Recovery (MSCR) testing can be conducted according to EN 16659 to determine percent recovery (%R) and non-recoverable creep compliance (Jnr) at specified stress levels and temperatures. Low-temperature performance can be evaluated using Bending Beam Rheometer (BBR) testing according to EN 14771 to determine the temperature at which creep stiffness S = 300 MPa and/or the temperature at which m-value = 0.300.

Conventional binder properties can be determined on the recovered binder, including penetration at 25°C (EN 1426), softening point (EN 1427), elastic recovery (EN 13398), and rotational viscosity (EN 13702-1). These parameters can be used to confirm the presence of polymer modification and to compare the recovered binder to defined rheological windows.

The presence and structural characteristics of a styrenic block copolymer (SBC) within the recovered binder can be determined using polymer analytical techniques. Gel permeation chromatography (GPC), for example according to ASTM D5296 using polystyrene calibration standards, can be employed to determine apparent peak molecular weight (Mp) and molecular weight distribution of the polymer fraction. Proton nuclear magnetic resonance spectroscopy (¹H NMR) and/or carbon-13 nuclear magnetic resonance spectroscopy (¹³C NMR) can be used to determine vinyl content and vinyl aromatic unit content (VAC) of the SBC. Fourier transform infrared spectroscopy (FTIR) can be used to confirm the presence of aromatic styrenic units and conjugated diene segments. Thermogravimetric analysis (TGA) or solvent fractionation techniques can be employed, where appropriate, to estimate polymer content within the recovered binder.

In embodiments where cross-linking agents or other additives are present, elemental analysis, spectroscopic techniques, or rheological behavior can provide indirect or direct evidence of such additives. For example, sulfur cross-linking can be inferred from rheological characteristics or determined by elemental sulfur analysis, and polyphosphoric acid or other modifiers can be detected through spectroscopic signatures.

The foregoing analytical procedures enable post-installation characterization of the binder phase of the asphalt paving composition, including confirmation of polymer modification, determination of SBC structural parameters, and measurement of rheological properties. Such analytical characterization can be performed on binder recovered from pavement cores, laboratory-prepared specimens, or other samples of the asphalt paving composition.

(Examples): The following examples are intended to be non-limiting.

The change in binder properties due to aging during production and service life was simulated in the laboratory. Short-term aging was performed using the Rolling Thin Film Oven Test (RTFOT) in accordance with EN 12607-1 to reflect aging occurring during manufacture, transport, and laying of asphalt. Long-term aging was simulated by subjecting the RTFOT-aged binder to Pressure Aging Vessel (PAV) conditioning in accordance with EN 14769 to represent in-service aging.

Preparation of aged binder: Short-term aging was performed using the Rolling Thin Film Oven Test (RTFOT) in accordance with EN 12607-1. Long-term aging was performed by subjecting the RTFOT-aged binder to Pressure Aging Vessel (PAV) conditioning in accordance with EN 14769.

Binders designated as "RTFOT aged" were aged by RTFOT. Binders designated as "RTFOT + PAV aged" were first subjected to RTFOT and subsequently subjected to PAV aging.

Multiple Stress Creep Recovery Test (MSCR): The MSCR test evaluates the high-temperature rutting resistance and elastic response of a binder under repeated loading, measured according to EN16659. Unless otherwise specified, MSCR testing was performed on binders after short-term aging by RTFOT in accordance with EN 12607-1. The parameter %R or "percent recovery" refers to the % of recoverable strain and indicates the elastic response of the material. The parameter Jnr ("non-recoverable creep compliance"), expressed in kPa⁻¹, represents the non-recoverable strain divided by the applied stress and indicates the susceptibility of the binder to permanent deformation. Lower Jnr values correspond to improved rutting resistance.

Viscosity measurements: Viscosity of the binder was measured using rotational viscometer (RV) at 120°C to 180°C according to EN 13702-1, using a DIN concentric cylinder spindle at a shear rate of 10 s⁻¹.

The components used in examples include:

SBC is a linear triblock copolymer styrene-butadiene-styrene having VAC 28 - 32 wt.%, Mₚ of block A 10 - 12 kg/mol, Mₚ of block copolymer 120 - 125 kg/mol, CE 80 - 85%, vinyl content 9 - 12 wt.%, and MFR 5 - 8 g/10 min at 200°C/5 kg.

Bitumen-1 is a penetration grade bitumen having a penetration value at 25°C between 100 and 150.

Bitumen-2 is a paving grade bitumen with penetration grade 70/100 according to EN12591.

AB-1 is an aged binder obtained by conditioning a binder (having a penetration grade of 35/50) in laboratory using RTFOT followed by PAV aging.

PmB-2 is a commercially available polymer-modified bituminous binder classified as 25/55-65 according to EN 14023.

(Example 1) - Preparation of PmB: In a laboratory mixing vessel, 6 wt.% of SBC was dissolved in Bitumen-1 at 160 to 180°C and stirred for 1 hour, then 0.1 wt.% sulfur was added as cross-linking agent and further stirred for 4 to 6 hours to obtain PmB-1. The resulting binder was used for rheological characterization and blending studies. Tables 1 to 5 summarize the properties of AB-1, PmB-1, blend of PmB-1 and AB-1, Bitumen-2, and PmB-2.

**Table 1 - Conventional Binder Properties Before and After Aging**

| | AB-1 | PmB-1 | Blend of AB-1/PmB-1 (50:50) | Bitumen-2 | PmB-2 |
|---|---|---|---|---|---|
| Penetration value at 25°C (0.1 mm) | 17 | 66 | 32 | 88 | 40 |
| Softening point temperature (°C) | 69.8 | 70.4 | 67.3 | 45.2 | 77.6 |
| Elastic recovery at 25°C (%) | - | 97 | 74 | - | 94 |

| After RTFOT | | | | | |
|---|---|---|---|---|---|
| Penetration value at 25°C (0.1 mm) | - | 50 | 26 | - | 27 |
| Softening point temperature (°C) | - | 72.0 | 69.0 | - | 74.6 |
| Elastic recovery at 25°C (%) | - | 97 | 77 | - | 86 |

| After RTFOT + PAV | | | | | |
|---|---|---|---|---|---|
| Penetration value at 25°C (0.1 mm) | - | 36 | 20 | 45 | 20 |
| Softening point temperature (°C) | - | 76.1 | 77.1 | 88 | 77.5 |
| BBR T at Creep stiffness S=300MPa (in °C) | -11.4 | -24.6 | -20.4 | -17.3 | -14.8 |
| BBR T at m-Value=0.300 (in °C) | > 0 | -23.9 | -16.1 | -19.2 | -8.2 |

**Table 2 -Viscosity of Binders**

| Viscosity (Pa.s) measured at: | AB-1 | PmB-1 | Blend of AB-1/PmB-1 (50:50) | PmB-2 | Blend of AB-1/PmB-2 (50:50) |
|---|---|---|---|---|---|
| 180°C | 0.180 | 0.306 | 0.212 | 0.36 | 0.27 |
| 165°C | 0.346 | 0.511 | 0.374 | 0.59 | 0.47 |
| 150°C | 0.758 | 0.934 | 0.731 | 1.08 | 0.92 |
| 135°C | 1.962 | 1.927 | 1.636 | 2.43 | 2.20 |
| 120°C | 6.215 | 4.441 | 4.244 | 7.66 | 6.94 |
| 105°C | 25.329 | 12.700 | 13.968 | 17.02 | 21.17 |
| 90°C | - | 48.920 | - | - | - |

**Table 3 - Elastic Recovery at 25°C Before and After RTFOT Aging**

| | PmB-1 | | Blend of AB-1/PmB-1 (50:50) | | PmB-2 | |
|---|---|---|---|---|---|---|
| | No aging | After aging (RTFOT) | No aging | After aging (RTFOT) | No aging | After aging (RTFOT) |
| Elastic recovery at 25°C (%) | 97 | 97 | 74 | 76 | 93 | 86 |

**Table 4 - Dynamic Shear Rheometer (DSR) Properties**

| | AB-1 | PmB-1 | Blend of AB-1/PmB-1 (50:50) | PmB-2 | Bitumen-2 |
|---|---|---|---|---|---|
| Cross-over temperature for tan δ=1 and corresponding \|G*\| (in kPa) | 39.1°C | 14.5°C | 25.4°C | 17.5°C | 4.0°C |
| | 4,555 kPa | 6,949 kPa | 6,217 kPa | 7,345 kPa | 35,368 kPa |
| | | | | | |
| T and δ at 10 rads⁻¹ at T for \|G*\|=5 MPa and corresponding δ | 38°C | 17°C | 27°C | 20°C | 15°C |
| | 44° | 47° | 46° | 48° | 61° |
| | | | | | |
| T and δ at 10 rads⁻¹ T for \|G*\|=15 kPa and corresponding δ | 84.0°C | 58.7°C | 67.7°C | 59.0°C | 47.2°C |
| | 78.1° | 55.9° | 68.3° | 59.9° | 82.4° |

**Table 5 - Multiple Stress Creep Recovery (MSCR)**

| | | AB-1 | PmB-1 | Blend of AB-1/PmB-1 (50:50) | PmB-2 | Bitumen-2 |
|---|---|---|---|---|---|---|
| At 60°C | %R_{3.2kPa} | 46 | 79 | 62 | 58 | 2 |
| | Jnr_{3.2kPa} | 0.03 | 0.06 | 0.07 | 0.11 | 1.14 |
| At 70°C | %R_{3.2kPa} | 23 | 50 | 35 | 30 | 0 |
| | Jnr_{3.2kPa} | 0.21 | 0.47 | 0.51 | 0.76 | 4.41 |

(Example 2) Preparation of paving composition: Reclaimed asphalt (RA) was pre-heated at 120°C for 2.5 hours. Virgin aggregates (including sand, if applicable) were pre-heated at 190°C for 8 hours. The pre-heated RA, in the amount specified in Table 6, was combined with the pre-heated virgin aggregates and mixed for 60 seconds. The binder (PmB-1, Bitumen-2, or PmB-2) was pre-heated at 165°C for 2 hours. The pre-heated binder was then added to the mixture of RA virgin aggregates and mixed for 90 seconds to ensure aggregates are fully coated. Finally, the filler was added, and the mixture was further mixed for 90 seconds to ensure uniform distribution and coating. Table 6 shows other asphalt paving compositions without PmB-1. Tables 7 and 8 present properties of respective compositions.

**Table 6 - Asphalt Mixture Formulations for Example 2**

| | Ex-2a | Ex-2b | Ex-2c | Ex-2d |
|---|---|---|---|---|
| Virgin course aggregates 6/12 (wt.%) | 63 | 47 | 47 | 47 |
| Sand 0/4 (wt.%) | 24.4 | - | - | - |
| Filler (cement) (wt.%) | 6.6 | 1 | 1 | 1 |
| RA (wt.%) | - | 48 | 48 | 48 |
| PmB-2 | 6 | - | 4 | - |
| Bitumen-2 (wt.%) | - | 4 | - | - |
| PmB-1 (wt.%) | - | - | - | 4 |
| Total binder** (wt.%) | 6 | 6.2* | 6.2* | 6.2* |
| Marshall air void content (%) | 9 | 4.7 | 8.0 | 5.6 |

| | | | | |
|---|---|---|---|---|
| *Amount includes 2.2 wt.% from RA. **Binder amount is relative to total of aggregates and binder. | | | | |

**Table 7 - Mechanical Performance of Asphalt Mixtures**

| | Ex-2a | Ex-2b | Ex-2c | Ex-2d |
|---|---|---|---|---|
| Gyratory compaction Void at 100 gyros at 150°C (%) | 10.2 | 4.1 | 6.9 | 7.4 |
| Gyratory compaction No. of Gyros for 7% void at 150°C | 200 | 46 | 96 | 112 |
| Indirect tensile strength (ITS) dry (kPa) | 1900 | 1750 | 2260 | 1950 |
| Indirect tensile strength ratio (ITSR) (%) | 93 | 89 | 100 | 100 |
| Rutting resistance at 10,000 cycles, by WTT (%) | 7.2 | 4.7 | 4.0 | 4.0 |
| No. of wheel load cycles required to reach 5% rutting depth | 2000 | 12400 | 30800 | 22400 |

**Table 8 - Gyratory Compaction Void Development**

| Gyrations | Gyratory compaction, Void at 150°C (%) | | Gyratory compaction, Void at 120°C (%) | |
|---|---|---|---|---|
| | Ex-2c | Ex-2d | Ex-2c | Ex-2d |
| 10 | 16.5 | 16.7 | 19.0 | 17.5 |
| 50 | 9.5 | 10.0 | 11.5 | 10.0 |
| 100 | 6.9 | 7.4 | 8.9 | 7.1 |
| 150 | 5.5 | 6.0 | 7.5 | 5.6 |
| 200 | 4.6 | 5.1 | 6.6 | 4.6 |

## Claims

1. An asphalt paving composition comprising, based on total weight of the asphalt paving composition:
(a) 3 to 8 wt.% of a polymer modified bitumen, the polymer modified bitumen comprising:
92 to 95 wt.% of a virgin bitumen,
5 to 8 wt.% of a styrenic block copolymer composed of:
at least one block A formed from a polymerized vinyl aromatic monomer, and
at least one block B formed from a polymerized conjugated diene monomer,
wherein the styrenic block copolymer has:
a vinyl content of 2 - 15 mol%, and
a molecular weight (Mₚ) of 80 - 150 kg/mol, and up to 3 wt.% of at least one additive;
(b) 30 to 70 wt.% of a reclaimed asphalt (RA);
(c) 27 to 70 wt.% of virgin aggregates; and
(d) up to 25 wt.% of optional components;
wherein the asphalt paving composition exhibits a relative rut depth of less than 5% after 10,000 wheel load cycles measured at 60°C according to EN 12697-22.

2. The asphalt paving composition of claim 1, wherein the polymer modified bitumen exhibits at least one of:
(i) a viscosity of 0.2 to 5 Pa.s, measured at 120 to 180°C, according to EN13302;
(ii) an elastic recovery of at least 90%, or at least 95%, measured at 25°C according to EN 13398, wherein the polymer modified bitumen is in a non-aged state or after short-term aging by Rolling Thin Film Oven Test (RTFOT) in accordance with EN 12607-1; and
(iii) a temperature at which the creep stiffness S equals 300 MPa of less than -15°C, or < -20°C, or < -25°C, as measured by Bending Beam Rheometer (BBR) according to EN 14771 after short-term aging by RTFOT in accordance with EN 12607-1 followed by long-term aging by PAV in accordance with EN 14769.

3. The asphalt paving composition of any of claims 1-2, wherein the polymer modified bitumen further comprises an aged binder at a weight ratio of virgin binder to aged binder of 3:7 to 7:3, and wherein the polymer modified bitumen exhibits an elastic recovery at 25°C of > 60%, or > 70%, as measured according to EN 13398 in a non-aged state or after short-term aging by Rolling Thin Film Oven Test (RTFOT) in accordance with EN 12607-1.

4. The asphalt paving composition of any of claims 1-3, wherein the polymer modified bitumen has a cross-over temperature for tan δ = 1 of 10 to 35°C, or 10 to 30°C and a complex shear modulus |G*| of 2000 to 50000, or 5000 to 50000 kPa, both measured according to EN14770.

5. The asphalt paving composition of any of claims 1-4, wherein the polymer modified bitumen has:
(i) a temperature T at |*G**| = 5 MPa of 10 to 35°C and a phase angle (δ) at complex shear modulus |G*| = 5 MPa of 30 to 65°; or
(ii) a temperature T at |*G**| = 15 kPa of 45 to 80°C and a phase angle (δ) at complex shear modulus |G*| = 15 kPa of 30 to 65°;
measured according to EN 14770.

6. The asphalt paving composition of any of claims 1-5, wherein the polymer modified bitumen has:
a percent recovery (%R) of > 50%; and
a non-recoverable creep compliance (Jnr) of < 1 kPa⁻¹;
both measured at a stress level of 3.2 kPa at 60°C according to EN16659.

7. The asphalt paving composition of any of claims 1-6, wherein the polymer modified bitumen has:
a percent recovery (%R) of > 30%; and
a non-recoverable creep compliance (Jnr) of < 1 kPa⁻¹,
both measured at a stress level of 3.2 kPa at 70°C according to EN16659.

8. The asphalt paving composition of any of claims 1-7, wherein the styrenic block copolymer has a general structure selected from A-B, (A-B)ₙX, A-B-A, (A-B-A)ₙX, A-B-A-B, A-B-A-B-A, and mixtures thereof; wherein n is an integer from 2 to 30, and X is a residue of a coupling agent.

9. The asphalt paving composition of claim 8, wherein the styrenic block copolymer has a general structure selected from (A-B)ₙX, A-B-A, and mixtures thereof.

10. The asphalt paving composition of any of claims 1-9, wherein the styrenic block copolymer has a vinyl aromatic unit content (VAC) of at least 25 wt.%, based on total weight of the styrenic block copolymer.

11. The asphalt paving composition of any of claims 1-10, wherein block A has a molecular weight (Mₚ) of 3 to 13 kg/mol.

12. The asphalt paving composition of any of claims 1-11, wherein the styrenic block copolymer has a molecular weight (Mₚ) of 90 to 140 kg/mol.

13. The asphalt paving composition of any of claims 1-12, wherein the polymer modified bitumen comprises 0.05 to 3 wt.% of at least one additive selected from the group consisting of stabilizers, warm-mix asphalt additives, cross-linking agents, fillers, UV stabilizers, plasticizers, processing aids, adhesion promoters, anti-stripping agents, rheology modifiers, extenders, antioxidants, and mixtures thereof.

14. The asphalt paving composition of claim 13, wherein the polymer modified bitumen comprises a cross-linking agent selected from the group consisting of elemental sulfur, hydrocarbyl polysulphides, dithiocarbamates, organic peroxides, polyphosphoric acid, metal oxides, silanes, and mixtures thereof.

15. The asphalt paving composition of any of claims 1-14, wherein the asphalt paving composition exhibits a void content of from 4 - 7% after 200 gyrations at a compaction temperature of 150 °C, measured according to EN 12697-31.
